# EUROPÄISCHE PATENTSCHRIFT

(11) **EP 3 524 547 B1**
(45) Veröffentlichungstag und Bekanntmachung des Hinweises auf die Patenterteilung: **19.08.2020**
(21) Anmeldenummer: 19155234.8
(22) Anmeldetag: 04.02.2019
(51) Int. Cl.: B65G 47/44, B65G 47/72, B65G 11/02

(54) **SCHÜTTGUTWEICHE UND SCHÜTTGUT-BESCHICKUNGSANLAGE MIT EINER SCHÜTTGUTWEICHE**
BULK GOODS ALIGNER AND BULK GOODS FEEDING ASSEMBLY WITH A BULK GOODS ALIGNER
TRÉMIE POUR PRODUIT EN VRAC ET INSTALLATION DE CHARGEMENT DU PRODUIT EN VRAC DOTÉE D'UNE TRÉMIE POUR PRODUIT EN VRAC

(30) Priorität: 08.02.2018 DE 102018202011
(43) Veröffentlichungstag der Anmeldung: 14.08.2019
(73) Patentinhaber: Benninghoven GmbH & Co. KG, 54516 Wittlich (DE)
(72) Erfinder: Licht, Ramón, 54472 Brauneberg (DE)
(74) Vertreter: Rau, Schneck & Hübner Patentanwälte Rechtsanwälte PartGmbB

(56) Entgegenhaltungen:
- CN-A- 101 723 185
- CN-U- 202 116 027
- JP-U- S5 441 079
- JP-U- S5 791 717
- JP-U- S5 830 625
- JP-U- S6 345 720

## Beschreibung

Die Erfindung betrifft eine Schüttgutweiche für eine Schüttgut-Beschickungsanlage und eine Schüttgut-Beschickungsanlage mit einer derartigen Schüttgutweiche.

Schüttgutweichen werden dazu verwendet, einen Schüttgutstrom umzulenken und, insbesondere selektiv, an verschiedene Bestimmungsorte zu leiten. So kann beispielsweise vorgesehen sein, über eine Schüttgutweiche verschiedene Silos mit Schüttgut zu beschicken. Schüttgutweichen werden auch als Wechselschurren bezeichnet.

JP S54 41079 U offenbart eine Schüttgutweiche für eine Schüttgut-Beschickungsanlage, aufweisend
- einen Einlass für ein Schüttgut,
- einen in einer Schüttrichtung von dem Einlass beabstandeten ersten Auslass für das Schüttgut,
   wobei zwischen dem ersten Auslass und dem Einlass ein Schüttvolumen entlang der Schüttrichtung definiert ist,
- mindestens zwei weitere Auslässe für das Schüttgut, und
- je weiteren Auslass eine Schüttgutrutsche, die zwischen einer das Schüttvolumen freigebenden Passivstellung und einer Aktivstellung verlagerbar sind,
- wobei jede Schüttgutrutsche in der jeweiligen Aktivstellung zumindest zum Teil in das Schüttvolumen hineinragt und sich bis zum jeweiligen weiteren Auslass erstreckt.

Es ist eine Aufgabe der vorliegenden Erfindung, eine Schüttgutweiche zu verbessern, insbesondere eine Schüttgutweiche zur flexiblen Beschickung von mindestens drei Beschickungs-Zielen bereitzustellen.

Diese Aufgabe wird gelöst durch eine Schüttgutweiche mit den in Anspruch 1 angegebenen Merkmalen. Die Schüttgutweiche weist einen Einlass für ein Schüttgut und einen in einer Schüttrichtung von dem Einlass beabstandeten ersten Auslass für das Schüttgut auf. Zwischen dem Einlass und dem ersten Auslass für das Schüttgut ist ein Schüttvolumen entlang der Schüttrichtung definiert. Weiterhin sind mindestens zwei weitere Auslässe für das Schüttgut und je weiteren Auslass eine Schüttgutrutsche vorhanden. Der Kern der Erfindung besteht darin, dass die den jeweiligen weiteren Auslässen zugeordneten Schüttgutrutschen jeweils unabhängig voneinander zwischen einer das Schüttvolumen freigebenden Passivstellung und einer Aktivstellung verlagerbar sind. Jede Schüttgutrutsche ragt in der jeweiligen Aktivstellung zumindest zum Teil in das Schüttvolumen hinein und erstreckt sich bis zum jeweiligen weiteren Auslass. Die Schüttgutrutschen und das Schüttvolumen stellen verschiedene Beschickungs-Wege zu verschiedenen Beschickungs-Zielen bereit. Durch die unabhängige Verlagerbarkeit der Schüttgutrutschen können die verschiedenen Beschickungs-Wege und damit die verschiedenen Beschickungs-Ziele flexibel, schnell und ausfallsicher geändert werden. Durch die individuelle Verlagerbarkeit der Schüttgutrutschen ist zudem eine kompakte Ausgestaltung der Schüttgutweiche gewährleistet. Das Vorsehen und aufwendige, langsame Verlagern einer großen Schüttgutweiche, welche verschiedene starr angeordnete Beschickungs-Wege aufweist, ist vermieden.

Die erfindungsgemäße Schüttgutweiche vereinfacht den Wechsel zwischen verschiedenen Beschickungs-Zielen. Die Schüttgutweiche wird auch als Wechselschurre bezeichnet.

Die Schüttgutweiche eignet sich zur Beschickung verschiedenster Beschickungs-Ziele. Dies können beispielsweise Schüttgut-Container, wie stationäre Silos oder auf LKW montierte Betonmischer, oder auch Anlagen zur weiteren Verarbeitung des Schüttguts sein.

Als Schüttgut dient beispielsweise eine Mischung von Asphaltkörnungen und/oder Gesteinskörnungen. Das Schüttgut ist insbesondere eine Mischung aus partikelförmigem Material.

Die Schüttrichtung ist als die kürzeste Verbindung vom Einlass zum Auslass definiert. Die Schüttrichtung steht insbesondere senkrecht auf einer Querschnittsfläche des Einlasses. Die Schüttrichtung weist insbesondere eine Erstreckung in Schwerkraftrichtung auf, sodass das Schüttgut rein passiv aufgrund der Schwerkraft entlang der Schüttrichtung strömen kann. Besonders bevorzugt ist die Schüttrichtung parallel zu der Schwerkraftrichtung.

Das Schüttvolumen wird durch eine Querschnittsfläche des Einlasses und einen Abstand vom Einlass zum Auslass entlang der Schüttrichtung aufgespannt. Bei einer parallel zur Schwerkraftrichtung verlaufenden Schüttrichtung ist das Schüttvolumen durch den Querschnitt des Einlasses und die Fallhöhe des Schüttguts vom Einlass zum Auslass definiert. Ein senkrecht zu der Schüttrichtung definierter Querschnitt der Schüttvolumen entspricht daher insbesondere dem Querschnitt des Einlasses.

Der Querschnitt des Einlasses kann eine beliebige Fläche und Kontur aufweisen. Der Querschnitt des Einlasses kann beispielsweise rund sein. Bevorzugt ist der Querschnitt des Einlasses im Wesentlichen rechteckig. Der Einlass ist somit an die Kontur gängiger Schurren, wie beispielsweise Trichter oder Rutschen, angepasst. Im Wesentlichen rechteckig bedeutet hierbei, dass die Ecken der Querschnittskontur beispielsweise abgerundet oder abgeflacht sein können. Auch können die Seitenkanten des im Wesentlichen rechteckigen Querschnitts ausgebeult sein.

Die mindestens zwei Schüttgutrutschen sind insbesondere in einer Richtung senkrecht zu der Schüttrichtung verlagerbar und bevorzugt sind die Schüttgutrutschen in horizontaler Richtung, das heißt senkrecht zu einer Schwerkraftrichtung, verlagerbar. Besonders bevorzugt findet die Verlagerung der Schüttgutrutschen nur entlang einer Geraden statt. Dies gewährleistet einen effektiven Verlagerungsmechanismus. Unnötige Wege bei der Verlagerung der Schüttgutrutschen sind vermieden. Die Schüttgutrutschen können verfahrbar, insbesondere entlang einer Schiene verfahrbar sein.

Gemäß einem Aspekt der Erfindung sind die verschiedenen Schüttgutrutschen an unterschiedlichen Seiten des senkrecht zu der Schüttrichtung definierten Querschnitts des Schüttvolumens angeordnet. Hierdurch ist verhindert, dass die unterschiedlichen Schüttgutrutschen beim jeweiligen Verlagern verhaken oder anderweitig blockieren. Beispielsweise kann an jeder Seite des Querschnitts eine Schüttgutrutsche angeordnet sein. Im Fall eines im Wesentlichen rechteckigen Querschnitts des Schüttvolumens sind die Schüttgutrutschen bevorzugt entlang der Seitenkanten des Rechtecks angeordnet. Somit können bis zu vier Schüttgutrutschen an den Seiten des im Wesentlichen rechteckigen Querschnitts angeordnet sein, wodurch eine Beschickung von bis zu fünf Beschickungs-Zielen flexibel und ausfallssicher gewährleistet ist.

Für den Fall das genau zwei weitere Auslässe mit jeweiligen Schüttgutrutschen vorgesehen sind, sind die Schüttgutrutschen bevorzugt bezüglich des Querschnitts des Schüttvolumens gegenüberliegend angeordnet. Die gegenüberliegend angeordneten Schüttgutrutschen sind insbesondere entlang einer gemeinsamen Verlagerrichtung verlagerbar.

Gemäß einem weiteren Aspekt der Erfindung weist die Schüttgutweiche mindestens ein Deckblech auf, das das Schüttvolumen zu einer Seite hin begrenzt, an welcher keine Schüttgutrutsche angeordnet ist. Bevorzugt weisen alle Seiten ohne Schüttgutrutsche ein entsprechendes Deckblech auf. Ein derartiges Deckblech begrenzt das Schüttvolumen wirksam. Ein durch das Schüttvolumen fließender Schüttgutstrom wird zuverlässig innerhalb des Schüttvolumens gehalten.

Das mindestens eine Deckblech kann starr an einer der Schüttgutrutschen angeordnet sein und mit dieser verlagert werden. Somit kann das Deckblech auch als zusätzliche Führung beim Verlagern zumindest der entsprechenden Schüttgutrutsche dienen. Im Falle zweier sich gegenüberliegend angeordneter Schüttgutrutschen kann eine der Schüttgutrutschen zwei Deckbleche aufweisen, welche derart beabstandet sind, dass die gegenüberliegende Schüttgutrutsche zwischen diesen Deckblechen geführt wird.

Gemäß einem weiteren Aspekt der Erfindung ist mindestens eine der Schüttgutrutsche in ihrer Passivstellung in einer Richtung senkrecht zu der Schüttrichtung direkt benachbart zu dem Schüttvolumen gelagert. Bevorzugt sind alle Schüttgutrutschen in ihrer jeweiligen Passivstellung in einer Richtung senkrecht zu der direkt benachbart zu den Schüttvolumen gelagert. Direkt benachbart bedeutet in diesem Zusammenhang, dass eine dem Schüttvolumen zugewandte Seite der Schüttgutrutsche mit einem Rand des Querschnitts des Schüttvolumens abschließt. Hierdurch sich kurze Wege beim Verlagern der Schüttgutrutschen aus der Passivstellung in die Aktivstellung und zurück gewährleistet. Die Schüttgutweiche kann einfach und effektiv zur Beschickung unterschiedlicher Beschickungs-Ziele umgestellt werden.

Gemäß einem weiteren Aspekt der Erfindung ist an mindestens einer der Schüttgutrutschen ein Wandblech angeordnet, welches in der jeweiligen Passivstellung das Schüttvolumen zu der betreffenden Schüttgutrutsche hin begrenzt. Bevorzugt ist an jeder Schüttgutrutsche ein entsprechendes Wandblech angeordnet. Das Wandblech bildet eine Begrenzungs-Wand für das Schüttvolumen. Das Schüttvolumen wird durch das Wandblech zu der betreffenden Schüttgutrutsche hin präzise definiert. Das Schüttgut kann beim Durchströmen des Schüttvolumens nicht in den Bereich der in ihrer Passivstellung gelagerten betreffenden Schüttgutrutsche gelangen und insbesondere nicht ungewollt durch den zugehörigen weiteren Auslass gelangen. Bevorzugt erstreckt sich das Wandblech in der Schüttrichtung über die gesamte Ausdehnung des Schüttvolumens, insbesondere über die gesamte Höhe des Schüttvolumens. Das Wandblech kann mit der Schüttgutrutsche verlagert werden.

Gemäß einem weiteren Aspekt der Erfindung ist je Schüttgutrutsche eine Antriebseinheit zum Verlagern der jeweiligen Schüttgutrutsche vorgesehen. Das Vorsehen je einer Antriebseinheit je Schüttgutrutsche verbessert deren individuelle Verlagerbarkeit. Bevorzugt ist die Antriebseinheit außerhalb der Schüttgutrutsche angeordnet. Die Schüttgutrutsche muss nicht über einen eigenen Antrieb verfügen. Dies gewährleistet eine einfache und ausfallssichere Verlagerung der Schüttgutrutschen.

Bevorzugt sind die Schüttgutrutschen mit Hilfe der Antriebseinheit verfahrbar. Hierzu können die Schüttgutrutschen beispielsweise auf einer Schiene gelagert sein, auf welcher sie durch die jeweilige Antriebseinheit von der Passiv- in die Aktivstellung und zurück verfahren, insbesondere verschoben werden.

Gemäß einem weiteren Aspekt der Erfindung weisen die Antriebseinheiten je einen Teleskopzylinder auf. Der Teleskopzylinder stellt einen Linearantrieb für die Schüttgutrutschen zur Verfügung. Hierdurch ist ein einfaches Verlagern der Schüttgutrutschen entlang der jeweiligen Verlagerrichtung gewährleistet. Die Verlagerung mit Hilfe eines Teleskopzylinders, insbesondere das Verfahren entlang einer Schiene, benötigt wenig relativ zueinander bewegbare Teile. Insbesondere müssen keine Förderbänder oder dergleichen für die Schüttgutrutschen vorgesehen sein. Die Antriebseinheit ist robust und ausfallsicher.

Die Teleskopzylinder können zum Verlagern der jeweiligen Schüttgutrutsche pneumatisch oder hydraulisch betrieben werden. Pneumatische und hydraulische Antriebssysteme sind leistungsstark und wartungsarm. Teleskopzylinder sind insbesondere Hubzylinder.

Gemäß einem weiteren Aspekt der Erfindung deckt mindestens eine der Schüttgutrutschen in ihrer Aktivstellung den senkrecht zu der Schüttrichtung definierten Querschnitt des Schüttvolumens vollständig ab. Besonders bevorzugt gilt dies für alle Schüttgutrutschen. In der Aktivstellung einer der Schüttgutrutschen kann ein durch den Einlass strömendes Schüttgut nicht ungewollt durch das Schüttvolumen zum ersten Auslass gelangen. Der gesamte durch den Einlass strömende Schüttgutstrom wird über die betreffende Schüttgutrutsche zu dem jeweiligen Auslass geleitet. Die Schüttgutweiche leitet den Schüttgutstrom zuverlässig.

Gemäß einem weiteren Aspekt der Erfindung überdeckt mindestens eine der Schüttgutrutschen in ihrer Passivstellung einen Querschnitt des jeweiligen weiteren Auslasses. Die Schüttgutrutsche bildet in ihrer Passivstellung ein Dach für den jeweiligen weiteren Auslass und schirmt diesen gegen von oben herabfallendes Schüttgut weitestgehend ab. Das Schüttgut kann nicht unbeabsichtigt in den weiteren Auslass gelangen. Besonders bevorzugt überdecken alle Schüttgutrutschen in ihrer jeweiligen Passivstellung einen Querschnitt des jeweiligen weiteren Auslasses.

Gemäß einem weiteren Aspekt der Erfindung verläuft mindestens eine der Schüttgutrutschen in ihrer Aktivstellung entlang einer kürzesten Verbindung zwischen dem Einlass und dem zugehörigen jeweiligen Auslass. Die Schüttgutrutsche verläuft insbesondere gerade entlang einer bezüglich der Schüttrichtung geneigten Ebene. Ein Umlenken des Schüttgutstroms erfolgt nicht. Ein Verstopfen der Schüttgutrutsche ist vermieden. Besonders bevorzugt verlaufen alle Schüttgutrutschen in ihrer jeweiligen Aktivstellung entlang der jeweiligen kürzesten Verbindung zwischen dem Einlass und dem zugehörigen weiteren Auslass.

Gemäß einem weiteren Aspekt der Erfindung weist mindestens eine der Schüttgutrutschen ein Rutschen-Rohr zur Führung von Schüttgut auf. Bevorzugt sind alle Schüttgutrutschen jeweils ein Rutschen-Rohr auf. Das Schüttgut kann in der Aktivstellung der betreffenden Schüttgutrutsche sicher und verlustfrei in dem Rutschen-Rohr zu dem jeweiligen weiteren Auslass geführt werden. Das Schüttgut kann von der jeweiligen Schüttgutrutsche nicht aus Versehen in einen der weiteren Auslässe gelangen.

Beispielsweise kann das Rutschen-Rohr als schräger Zylinder ausgeführt sein. Besonders bevorzugt ist das Rutschen-Rohr als schräger Zylinder mit quadratischer Grundfläche ausgeführt.

Gemäß einem weiteren Aspekt der Erfindung weist das Rutschen-Rohr einen Rohr-Einlass auf, wobei der Rohr-Einlass in der Aktivstellung der betreffenden Schüttgutrutsche den Querschnitt des Einlasses vollständig überdeckt. Dies gewährleistet auf einfache Weise, dass die Schüttgutrutsche den senkrecht zu der Schüttrichtung definierten Querschnitt des Schüttvolumens vollständig abdeckt. Das gesamte durch den Einlass strömende Schüttgut gelangt in der Aktivstellung der betreffenden Schüttgutrutsche durch den Rohr-Einlass in das Rutschen-Rohr und rutscht hierin zu dem jeweiligen Auslass. Insbesondere haben der Rohr-Einlass und der Einlass den gleichen Querschnitt. Dies gewährleistet eine kompakte Bauweise und stellt zugleich sicher, dass das gesamte durch den Einlass strömende Schüttgut in das Rutschen-Rohr aufgenommen wird. Besonders bevorzugt weisen alle Schüttgutrutschen ein Rutschen-Rohr mit einem entsprechenden Rohr-Einlass auf.

Gemäß einem weiteren vorteilhaften Aspekt der Erfindung weist die Schüttgutweiche im Bereich mindestens eines der Auslässe ein Prallblech zum Umlenken eines durch den jeweiligen Auslass strömenden Schüttguts auf. Das mindestens eine Prallblech kann sich vom jeweiligen Auslass weg in der Schüttrichtung erstrecken. Bevorzugt wird das Schüttgut durch das Prallblech derart umgelenkt, dass dieses im Wesentlichen entlang der Schwerkraftrichtung strömt. Das Schüttgut wird gebündelt und eine Materialsegregation desselben vermieden. Das Prallblech kann parallel zur Schwerkraftrichtung oder bezüglich der Schwerkraftrichtung geneigt angeordnet sein. Insbesondere ist das Prallblech entgegen einer von der Schwerkraftrichtung abweichenden Geschwindigkeitskomponente des Schüttguts geneigt. Eine von der Schwerkraftrichtung abweichende Geschwindigkeitskomponente des Schüttguts kann insbesondere durch die Ausrichtung einer der Schüttgutrutschen, durch die das Schüttgut zu den weiteren Auslässen strömt, bedingt sein.

Besonders bevorzugt weisen die beiden weiteren Auslässe, die jeweils einer der Schüttgutrutschen zugeordnet sind, jeweils ein Prallblech auf. Die beiden Prallbleche können dann jeweils entgegen der von der Schwerkraftrichtung abweichenden Geschwindigkeitskomponente des Schüttguts geneigt sein. Zudem kann ein entsprechendes Prallblech auch im Bereich des ersten Auslasses angeordnet sein, insbesondere wenn dieser gegenüber dem Einlass senkrecht zu der Schwerkraftrichtung versetzt ist.

Es ist eine weitere Aufgabe der Erfindung, eine Schüttgut-Beschickungsanlage zu verbessern.

Diese Aufgabe wird gelöst durch eine Schüttgut-Beschickungsanlage gemäß Anspruch 14. Die Schüttgut-Beschickungsanlage weist eine Schüttgutweiche mit den oben genannten Merkmalen auf. Die Vorteile der Schüttgut-Beschickungsanlage ergeben sich aus den Vorteilen der Schüttgutweiche.

Gemäß einem weiteren Aspekt der Erfindung weist die Schüttgut-Beschickungsanlage einen Schüttguttrichter mit einer Austrittsöffnung für ein Schüttgut auf. Die Austrittsöffnung des Schüttguttrichters korrespondiert mit dem Einlass der Schüttgutweiche. Die Austrittsöffnung und der Einlass können insbesondere gleiche Querschnitte aufweisen. Der Einlass kann im Wesentlichen durch die Austrittsöffnung definiert sein. Durch den Schüttguttrichter wird das Schüttgut auf einfache und verlustfreie Weise der Schüttgutweiche zugeleitet. Besonders bevorzugt wird durch den Schüttguttrichter eine Segregation des Schüttguts vermieden. Der Schüttguttrichter ist insbesondere in Schüttrichtung oberhalb der Schüttgutweiche angeordnet. Dies gewährleistet eine rein passive und effektive Förderung des Schüttguts über den Schüttguttrichter und die Schüttgutweiche hin zu den jeweiligen Beschickungs-Zielen.

Weitere Merkmale und Vorteile der Erfindung werden anhand des nachfolgenden Ausführungsbeispiels und den zugehörigen Figuren beschrieben. Die Figuren zeigen:
- Fig. 1: eine perspektivische Ansicht einer Schüttgut-Beschickungsanlage mit einem Schüttguttrichter und einer Schüttgutweiche, wobei zwei Schüttgutrutschen der Schüttgutweiche jeweils in ihrer Passivstellung dargestellt sind,
- Fig. 2: ein Längsschnitt durch die Schüttgut-Beschickungsanlage gemäß Fig. 1,
- Fig. 3: ein Längsschnitt durch die Schüttgut-Beschickungsanlage gemäß Fig. 1, wobei eine der zwei Schüttgutrutschen in ihrer Aktivstellung gezeigt ist,
- Fig. 4: ein Längsschnitt durch die Schüttgut-Beschickungsanlage gemäß Fig. 1, wobei die andere der zwei Schüttgutrutschen der Schüttgutweiche in ihrer Aktivstellung gezeigt ist, und
- Fig. 5: eine Aufsicht auf die Schüttgutweiche gemäß Fig. 1, wobei die Stellung der Schüttgutrutschen der der Fig. 4 entspricht.

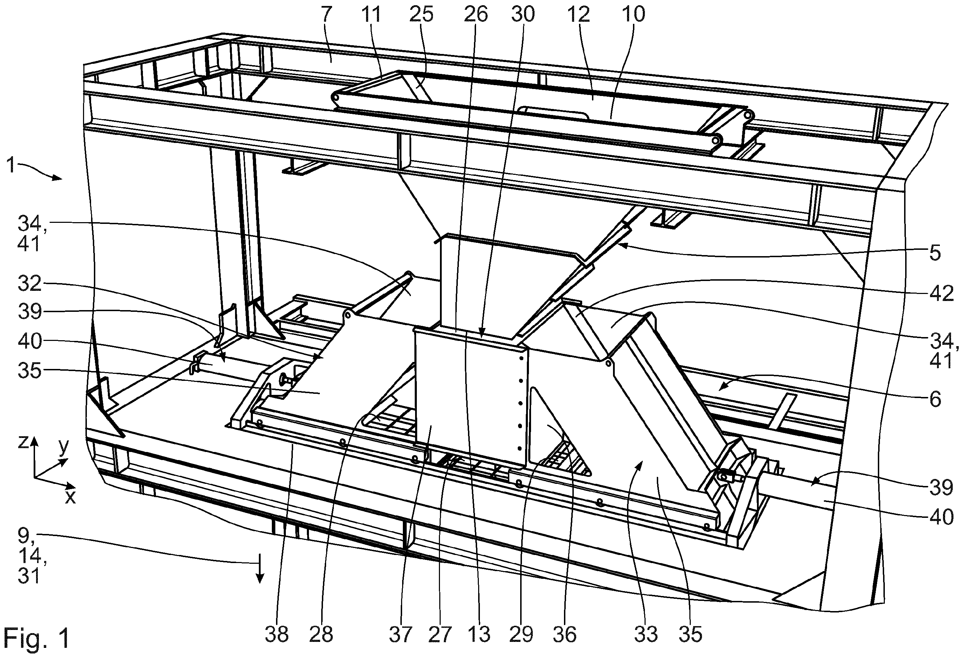

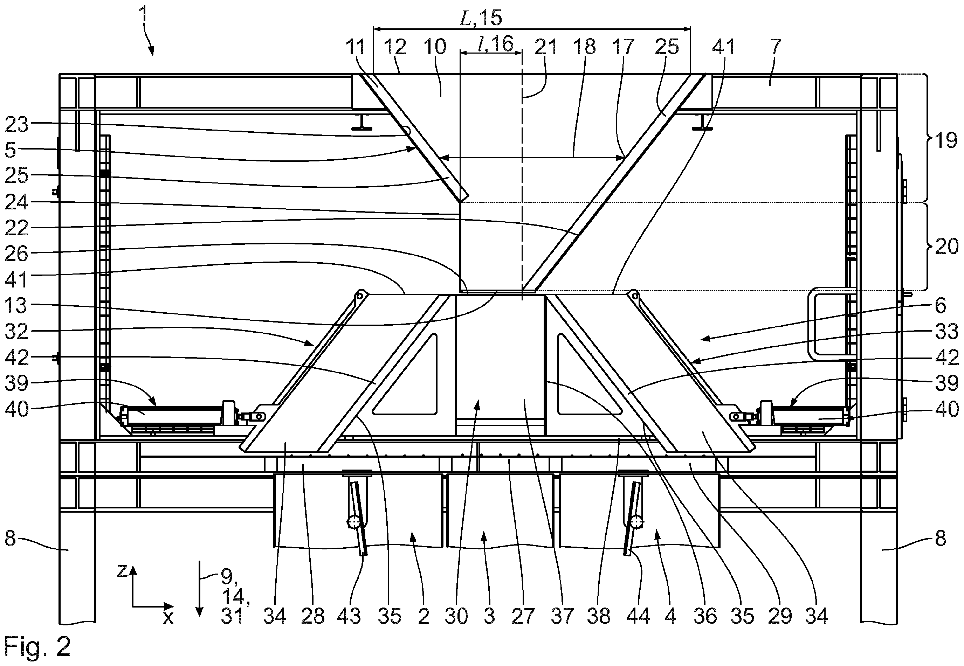

In den Fig. 1 bis 5 ist ein Ausführungsbeispiel einer Schüttgut-Beschickungsanlage 1 gezeigt. Die Schüttgut-Beschickungsanlage 1 dient zum Abfüllen von Schüttgut in drei Schüttgut-Container 2, 3, 4, die schematisch in den Fig. 2 bis 4 angedeutet sind. Bei den Schüttgut-Containern 2, 3, 4 handelt es sich um Silos. In weiteren Ausführungsbeispielen können dies auch andere Schüttgut-Container, wie beispielsweise auf LKW montierte Betonmischer, sein.

Zur Aufnahme eines abzufüllenden Schüttguts weist die Schüttgut-Beschickungsanlage einen Schüttguttrichter 5 auf. Der Schüttguttrichter 5 leitet das Schüttgut an eine Schüttgutweiche 6 weiter, die das Schüttgut auf die Schüttgut-Container 2, 3, 4 verteilt. Der Schüttguttrichter 5 und die Schüttgutweiche 6 sind in einem Rahmen 7 angeordnet. Der Rahmen 7 weist Füße 8 auf, sodass die Schüttgut-Beschickungsanlage 1 in Bezug auf eine Schwerkraftrichtung 9 oberhalb der Schüttgut-Container 2, 3, 4 angeordnet ist. Das Schüttgut wird in der Schüttgut-Beschickungsanlage 1 daher rein aufgrund der in der Schwerkraftrichtung 9 wirkenden Schwerkraft in die Schüttgut-Container 2, 3, 4 gefördert. Aktive Fördermechanismen sind daher nicht nötig. Eine Verkleidung der Schüttgut-Beschickungsanlage 1, welche am Rahmen 7 angeordnet ist, ist in den Fig. 1 bis 5 aus Gründen der Übersichtlichkeit nicht dargestellt.

Zur Beschreibung der Komponenten der Schüttgut-Beschickungsanlage 1 wird im Folgenden das in den Figuren dargestellte orthogonale Koordinatensystem aus x-, y- und z-Achse verwendet. Die Schüttgut-Beschickungsanlage 1 weist eine Länge in Richtung der x-Achse, eine Tiefe in Richtung der y-Achse und eine Höhe in Richtung der z-Achse auf. Die Schwerkraftrichtung 9 verläuft parallel zu der z-Achse.

Im Folgenden wird der Schüttguttrichters 5 und dessen Funktionsweise im Detail beschrieben. Der Schüttguttrichter 5 weist ein einen Innenraum 10 begrenzendes Gehäuse 11 auf. Das Gehäuse 11 weist eine Eintrittsöffnung 12 für das Schüttgut und eine Austrittsöffnung 13 für das Schüttgut auf. Die Eintrittsöffnung 12 und die Austrittsöffnung 13 sind Teil des Innenraums 10. Die Eintrittsöffnung 12 ist in Richtung der z-Achse am oberen Ende des Schüttguttrichters 5 ausgeführt. Die Austrittsöffnung 13 liegt der Eintrittsöffnung 12 am unteren Ende des Schüttguttrichters 5 gegenüber. Die Eintrittsöffnung 12 und die Austrittsöffnung 13 sind parallel zueinander und parallel zu einer die x-Achse und die y-Achse aufgespannte Ebene. Die Eintrittsöffnung 12 ist über den Innenraum 10 in einer Förderrichtung 14 mit der Austrittsöffnung 13 verbunden. Die Förderrichtung 14 steht auf den Querschnittsflächen der Eintrittsöffnung 12 und der Austrittsöffnung 13 senkrecht. Die Förderrichtung 14 verläuft entlang der Schwerkraftrichtung 9 und stellt die kürzeste Verbindung zwischen der Eintrittsöffnung 12 und der Austrittsöffnung 13 dar.

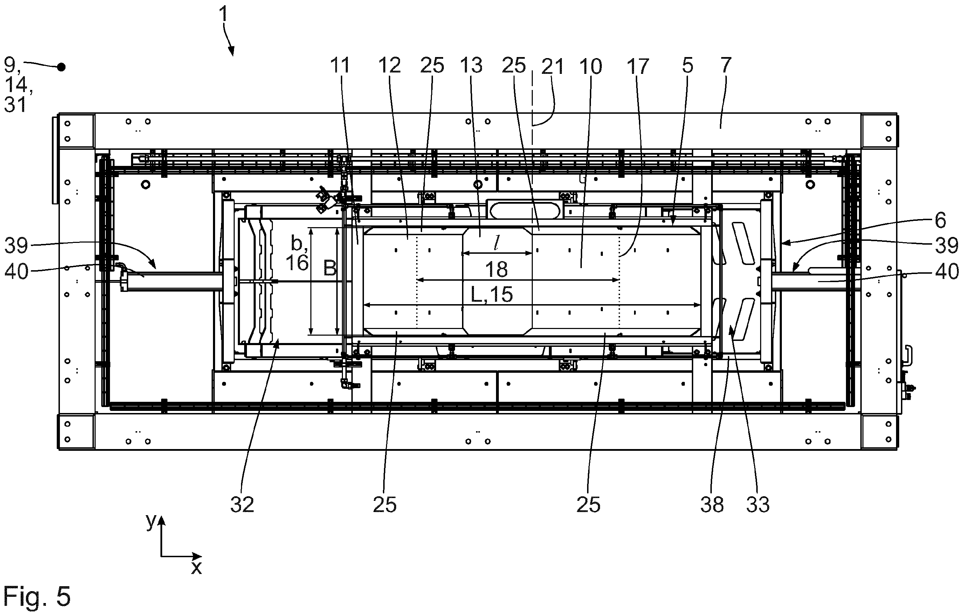

Wie insbesondere in Fig. 5 zu sehen ist, ist die Eintrittsöffnung 12 im Wesentlichen rechteckig. Die Eintrittsöffnung 12 weist in Richtung der x-Achse eine Länge L und in Richtung der y-Achse eine Breite B auf. Die x-Achse stellt daher eine Längsrichtung x des Schüttguttrichters 5 dar. Die y-Achse ist eine Querrichtung y des Schüttguttrichters 5. Die Länge L der Eintrittsöffnung 12 ist um mehr als den Faktor 2 länger als deren in Querrichtung y gemessene Breite B. Die Eintrittsöffnung 12 weist daher eine ausgeprägte Haupterstreckung 15 auf, deren Orientierung parallel zur Längsrichtung x ist.

Auch die Austrittsöffnung 13 ist im Wesentlichen rechteckig. Die Austrittsöffnung 13 weist eine Länge 1 in Längsrichtung x und eine Breite b in Querrichtung y auf. Die Breite b der Austrittsöffnung 13 übersteigt deren Länge 1 mindestens um den Faktor 1,5. Auch die Austrittsöffnung 13 weist daher eine ausgeprägte Haupterstreckung 16 auf, deren Orientierung parallel zur Querrichtung y ist. Die Orientierung der Haupterstreckung 15 der Eintrittsöffnung 12 weist zu der Orientierung der Haupterstreckung 16 der Austrittsöffnung 13 daher einen Winkel von 90° auf. Mit anderen Worten, die Orientierung der Haupterstreckung 15 der Eintrittsöffnung 12 steht senkrecht auf der Orientierung der Haupterstreckung 16 der Austrittsöffnung 13.

Der Innenraum 10 des Schüttguttrichters 5 weist einen senkrecht zu der Förderrichtung 14 definierten Querschnitt 17 auf. In den Figuren ist der Querschnitt 17 des Innenraums 10 auf einer bestimmten Höhe des Schüttguttrichters 5, also an einer bestimmten Position entlang der Förderrichtung 14 eingezeichnet. Ein beispielhafter Querschnitt 17 ist in Fig. 5 gestrichelt angedeutet. Der Querschnitt 17 ist jedoch für alle Positionen entlang der Förderrichtung 14 über die Höhe des Schüttguttrichters 5 definiert. Eine Fläche des Querschnitts 17 des Innenraums 10 verringert sich von der Eintrittsöffnung 12 in Richtung der Förderrichtung 14 hin zur Austrittsöffnung 13. Die maximale Fläche des Querschnitts 17 ist durch die Fläche der Eintrittsöffnung 12 definiert, sie beträgt im Wesentlichen L . B. Die minimale Fläche des Querschnitts 17 entspricht der Fläche der Austrittsöffnung 13, sie beträgt im Wesentlichen 1 . b.

Wie die Eintrittsöffnung 12 und die Austrittsöffnung 13 ist der Querschnitt 17 des Innenraums 10 im Wesentlichen rechteckig. Auch der Querschnitt 17 weist daher eine Haupterstreckung 18 auf. Die Orientierung der Haupterstreckung 18 gibt wiederum diejenige Richtung an, welche parallel zu der längeren Seitenlänge des Querschnitts ist. Senkrecht zu der Orientierung der Haupterstreckung 18 hat der Querschnitt 17 daher eine geringere Ausdehnung als in Richtung der Orientierung der Haupterstreckung 18. Da die Orientierungen der Haupterstreckung 15 der Eintrittsöffnung 12 und der Haupterstreckung 16 der Austrittsöffnung 13 senkrecht aufeinander stehen, ändert sich die Orientierung der Haupterstreckung 18 des Innenraums 10 entlang der Förderrichtung 14. Bei dem hier gezeigten Ausführungsbeispiel dreht sich die Orientierung der Haupterstreckung 18 entlang der Förderrichtung um 90°.

Wie insbesondere in Fig. 5 zu sehen ist, variiert eine Breite des Querschnitts 17 des Innenraums 10 in Querrichtung y über die gesamte Höhe des Schüttguttrichters 5 in der Förderrichtung 14 um weniger als 5%. Die Breite des Querschnitts 17 in Querrichtung y ist im Wesentlichen konstant und gleich der Breite B der Eintrittsöffnung 12. Zur Verjüngung der Fläche des Querschnitts 17 abhängig von der Position entlang der Förderrichtung 14 wird die Ausdehnung des Querschnitts 17 entlang der Förderrichtung 14 kontinuierlich verringert (vgl. insbesondere Fig. 2 bis 4). Für alle Positionen entlang der Förderrichtung 14, für welche die Ausdehnung des Querschnitts 17 in Längsrichtung x größer als die Breite B ist, verläuft die Orientierung der Haupterstreckung 18 parallel zur Längsrichtung x. Eine derartige Orientierung der Haupterstreckung 18 ist in den Fig. 2 bis 5 eingezeichnet. Für alle Positionen entlang der Förderrichtung 14, für welche die Ausdehnung des Querschnitts 17 in Längsrichtung x kleiner als die Breite B ist, verläuft die Haupterstreckung 18 des Querschnitts 17 in Querrichtung 14. Die Orientierung der Haupterstreckung 18 wird daher an derjenigen Position entlang der Förderrichtung 14 gedreht, an welcher die Ausdehnung des Querschnitts 17 in Längsrichtung x die Breite B der Eintrittsöffnung unterschreitet.

Der Schüttguttrichter 5 weist einen Eintrittsabschnitt 19 und einen Austrittsabschnitt 20 auf. Der Eintrittsabschnitt 19 erstreckt sich von der Eintrittsöffnung 12 über die Hälfte der Höhe des Schüttguttrichters 5 in Förderrichtung 14. Der Austrittsabschnitt 20 schließt sich in der Förderrichtung 14 an den Eintrittsabschnitt 19 an und erstreckt sich bis zur Austrittsöffnung 13. In der aus Förderrichtung 14 und Längsrichtung x gebildeten Schnittfläche, welche in den Fig. 2 bis 4 dargestellt ist, weist der Eintrittsabschnitt 19 die Form eines regelmäßigen, sich in der Förderrichtung 14 verjüngenden Trapezes auf. Der Austrittsabschnitt 20 hat in dieser Schnittebene die Form eines unregelmäßigen, rechtwinkligen Trapezes. In dem Eintrittsabschnitt 19 sind an den beiden bezüglich der Längsrichtung x definierten Stirnwänden 24 des Gehäuses 11 zu der Förderrichtung 14 geneigt verlaufende Prallflächen 22, 23 ausgebildet. Die Prallflächen 22, 23 sind in dem Eintrittsabschnitt 19 zu einer Spiegelebene 21 spiegelsymmetrisch. Die Spiegelebene 21 verläuft parallel zu der Querrichtung y durch den bezüglich der Längsrichtung x gemessenen Mittelpunkt der Eintrittsöffnung 12. Die Spiegelebene 12 läuft durch einen Flächenschwerpunkt der Eintrittsöffnung 12. Diese Symmetrie ist im Bereich des Austrittsabschnitts 20 gebrochen. Während die einer der Stirnwände 24 zugeordnete Prallfläche 22 sich auch im Bereich des Austrittsabschnitts 20 erstreckt, endet die Prallfläche 23 am Übergang zwischen dem Eintrittsabschnitt 19 zum Austrittsabschnitt 20. Eine sich in dem Austrittsabschnitt 20 an die Prallfläche 23 anschließende Stirnwand 24 des Gehäuses 11 verläuft parallel zu der Förderrichtung 14. Dieser Symmetriebruch führt unter anderem dazu, dass ein Flächenschwerpunkt der Austrittsöffnung 13 entlang der Längsrichtung x gegenüber dem Flächenschwerpunkt der Eintrittsöffnung verschoben ist (vgl. Fig. 5). Der Flächenschwerpunkt der Austrittsöffnung 13 ist um etwa 10 % der Länge L der Eintrittsöffnung 12 entlang der Längsrichtung x gegenüber dem Flächenschwerpunkt der Eintrittsöffnung 12 verschoben.

Die Geometrie des Schüttguttrichters 5 weist eine Vielzahl von asymmetrischen Elementen auf, wie das Verhältnis der Länge L zu der Breite B der Eintrittsöffnung 12, das Verhältnis der Länge 1 zu der Breite b der Austrittsöffnung 13, die senkrecht zueinander verlaufenden Orientierungen der Haupterstreckung 15 der Eintrittsöffnung 12 und der Haupterstreckung 16 der Austrittsöffnung 13, das Drehen der Haupterstreckung 18 des Querschnitts 17 des Innenraums 10 und den Symmetriebruch zwischen Eintrittsabschnitt 19 und Austrittsabschnitt 20. Der Strömungsverlauf eines durch den Schüttguttrichter 5 strömenden Schüttguts muss sich an diese asymmetrischen Elemente der Geometrie des Schüttguttrichters 5 anpassen. So muss sich der Schüttgutstrom insbesondere an die sich abhängig von einer Position entlang der Förderrichtung 14 ändernde Haupterstreckung 18 anpassen. Dies bewirkt eine Kreuzung des Schüttgutstroms und damit eine Durchmischung des Schüttguts. Ähnlich wirkt sich der Symmetriebruch zwischen dem Eintrittsabschnitt 19 und dem Austrittsabschnitt 20 aus, wobei ein entlang der Prallfläche 22 verlaufender Anteil des Schüttgutstroms mit einem von der Prallfläche 23 umgelenkten Schüttgutstroms gekreuzt wird. Die Kreuzung und das damit einhergehende Durchmischen des Schüttgutstroms vermeidet eine Segregation des Schüttguts effektiv und zuverlässig.

Das Gehäuse 11 besteht aus einem verschleißfesten Material. Entlang von Kanten zwischen den Prallflächen 22, 23 und seitlichen Gehäusewänden sind Eckleisten 25 aus verschleißfestem Material angeordnet. Die Eckleisten 25 sind um 45° gegenüber den Prallflächen 22, 23 angestellt. Sie verhindern das Anbacken von Schüttgut.

Im Folgenden wird nun die Schüttgutweiche 6, welche das Schüttgut im Anschluss an den Schüttguttrichter 5 durchströmt, beschrieben. Die Schüttgutweiche 6 weist einen Einlass 26 für das Schüttgut auf (vgl. Fig. 1 und 2). Der Einlass 26 der Schüttgutweiche 6 ist in Förderrichtung 14 im Anschluss an die Austrittsöffnung 13 des Schüttguttrichters 5 angeordnet. Ein Querschnitt des Einlasses 26 ist derart gewählt, dass er mit der Austrittsöffnung 13 der Schüttgutweiche 6 korrespondiert. Die Querschnittsfläche des Einlasses 26 deckt die Austrittsöffnung 13 des Schüttguttrichters 5 vollständig ab. Der Einlass 26 ist im Wesentlichen durch die Austrittsöffnung 13 des Schüttguttrichters 5 definiert.

Zur Beschickung der verschiedenen Schüttgut-Container 2, 3, 4 weist die Schüttgutweiche 6 einen ersten Auslass 27 und zwei weitere Auslässe 28, 29 auf. Der erste Auslass 27 ist dem Schüttgut-Container 3 zugeordnet und befindet sich in Bezug auf die Längsrichtung x zwischen den weiteren Auslässen 28, 29. Der erste Auslass 27 wird daher im Folgenden auch als mittiger Auslass 27 bezeichnet. Der weitere Auslass 28 ist in den Figuren bezogen auf die Längsrichtung x links des mittigen Auslasses 27 dargestellt. Der weitere Auslass 28 wird daher im Folgenden auch als linker Auslass 28 bezeichnet. Der linke Auslass 28 ist dem Schüttgut-Container 2 zugeordnet. Der weitere Auslass 29 ist in den Figuren bezogen auf die Längsrichtung x rechts des mittigen Auslasses 27 angeordnet und wird im Folgenden auch als rechter Auslass 29 bezeichnet. Der rechte Auslass 29 ist dem Schüttgut-Container 4 zugeordnet.

Zwischen dem Einlass 26 und dem mittigen Auslass 27 ist ein Schüttvolumen 30 definiert (vgl. Fig. 1 und 2). Das Schüttvolumen 30 verbindet den Einlass 26 mit dem mittigen Auslass 27 entlang einer Schüttrichtung 31. Das Schüttvolumen 30 wird hierbei durch die Querschnittsfläche des Einlasses 26 und den Abstand zwischen Einlass 26 und mittigen Auslass 27 entlang der Schüttrichtung 31 aufgespannt. Die Schüttrichtung 31 ist die kürzeste Verbindung vom Einlass 26 zum mittigen Auslass 27. Die Schüttrichtung 31 steht senkrecht auf der Querschnittsfläche des Einlasses 26 und verläuft parallel zu der Schwerkraftrichtung 9 und damit auch parallel zu der Förderrichtung 14. Die Ausdehnung des Schüttvolumens 30 entlang der Schüttrichtung 31 entspricht daher einer Fallhöhe für das Schüttgut vom Einlass 26 zum mittigen Auslass 27.

Je weiteren Auslass 28, 29 ist eine Schüttgutrutsche 32, 33 vorhanden. Die Schüttgutrutsche 32 ist dem linken Auslass 28 und die Schüttgutrutsche 33 dem rechten Auslass 29 zugeordnet. Die Schüttgutrutschen 32, 33 sind einander entlang der Längsrichtung x bezogen auf das Schüttvolumen 30 gegenüberliegend angeordnet.

Die Schüttgutrutschen 32, 33 weisen jeweils ein Rutschen-Rohr 34 auf. Die jeweiligen Rutschen-Rohre 34 weisen jeweils ein Rutschen-Gehäuse 35 auf, welches einen schiefen Hohlzylinder bildet. Der Hohlzylinder des Rutschen-Gehäuses 35 weist eine quadratische Grundfläche auf. Jedes Rutschen-Rohr 34 weist an einem in Bezug auf die Schüttrichtung 31 oberen Ende einen Rohr-Einlass 41 auf. Der Querschnitt des Rohr-Einlasses 41 entspricht dem Querschnitt der Grundfläche des Rutschen-Rohrs 34. Der senkrecht zu der Schüttrichtung 31 definierte Innenquerschnitt der Rutschen-Rohre 34 und der Querschnitt der Rohr-Einlässe 41 entsprechen jeweils dem Querschnitt des Einlasses 26 in Kontur und Fläche. Der Querschnitt jedes Rohr-Einlasses 41 ist daher auch dazu geeignet, mit der Austrittsöffnung 13 des Schüttguttrichters 5 zu korrespondieren.

Die Schüttgutrutschen 32, 33 weisen jeweils ein Wandblech 36 auf. Die Wandbleche 36 verlaufen jeweils in einer aus der Querrichtung y und der Schüttrichtung 31 gebildeten Ebene. Die Schüttgutrutsche 33 weist zudem zwei Deckbleche 37 auf. Die Deckblecke 37 sind bezogen auf die Querrichtung y an den Seiten des Wandblechs 36 der Schüttgutrutsche 33 angeordnet und erstrecken sich von dem Wandblech 36 entlang der Längsrichtung x in Richtung der gegenüberliegenden Schüttgutrutsche 32. Die Deckbleche 37 sind in Querrichtung y um eine in Querrichtung y gemessene Ausdehnung des Schüttvolumens 30 beabstandet. Da das Schüttvolumen 30 die Austrittsöffnung 13 des Schüttguttrichters 5 vollständig überdeckt, sind die Deckblecke 37 daher zumindest um die Breite b der Austrittsöffnung 13 in Querrichtung y beabstandet.

Die Schüttgutrutschen 32, 33 sind jeweils unabhängig voneinander von einer jeweiligen Passivstellung in eine jeweilige Aktivstellung verlagerbar. Hierzu sind die Schüttgutrutschen 32, 33 auf einer gemeinsamen Schiene 38 angeordnet. Die Schiene 38 verläuft in Längsrichtung x. Die Längsrichtung x stellt eine Verlagerrichtung für die Verlagerung der Schüttgutrutschen 32, 33 dar. Die Schüttgutrutschen 32, 33 sind daher entlang der Längsrichtung x, das heißt senkrecht zu der Schüttrichtung 31, verlagerbar. Zur Verlagerung der Schüttgutrutschen 32, 33 ist jeweils eine Antriebseinheit 39 vorhanden. Die Antriebseinheiten 39 umfassen jeweils einen Teleskopzylinder 40 mit einem Linearantrieb. Durch Ein- und Ausfahren der Teleskopzylinder 40 werden die Schüttgutrutschen 32, 33 entlang der Schienen 38 verfahren. Zum Antrieb der Teleskopzylinder kann ein nicht dargestellter Elektromotor vorgesehen sein. Alternativ können die Teleskopzylinder als Hydraulik- oder Pneumatikzylinder ausgeführt sein. Weitere Komponenten, wie Druckluftleitungen oder Stromführungen hin zu den Teleskopzylindern 40, sind der Einfachheit halber in den Figuren nicht dargestellt.

Die Deckbleche 37 der Schüttgutrutsche 33 sind derart in Querrichtung zueinander beabstandet, dass die Schüttgutrutsche 32 zwischen den Deckblechen 37 Platz findet. Beim Verlagern der Schüttgutrutsche 32 oder der Schüttgutrutsche 33 dienen die Deckbleche 37 der Schüttgutrutsche 33 als Führungselemente, an welchem die jeweilige geführte Schüttgutrutsche geführt wird.

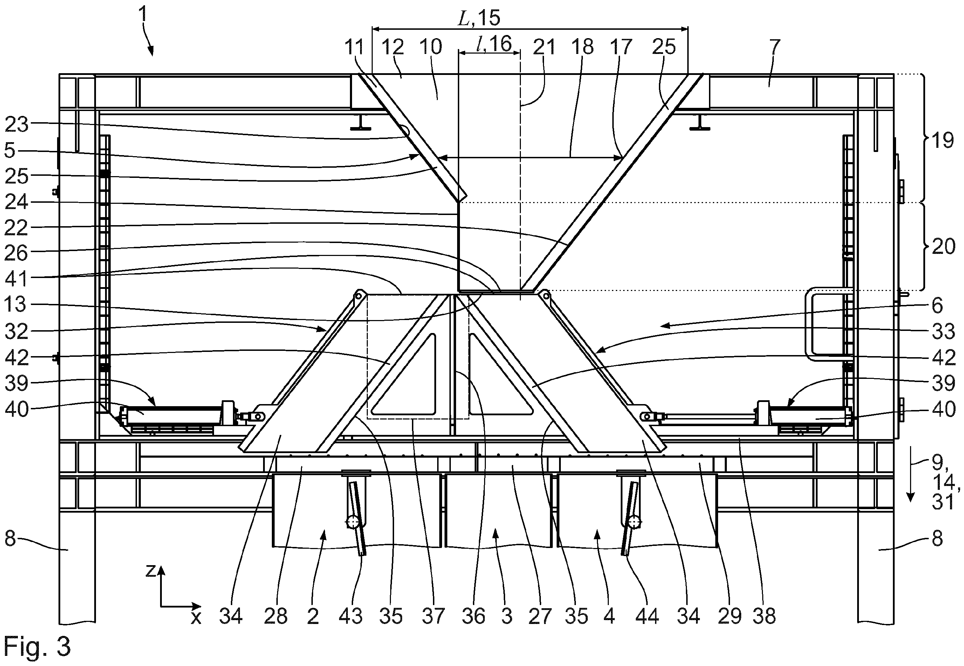

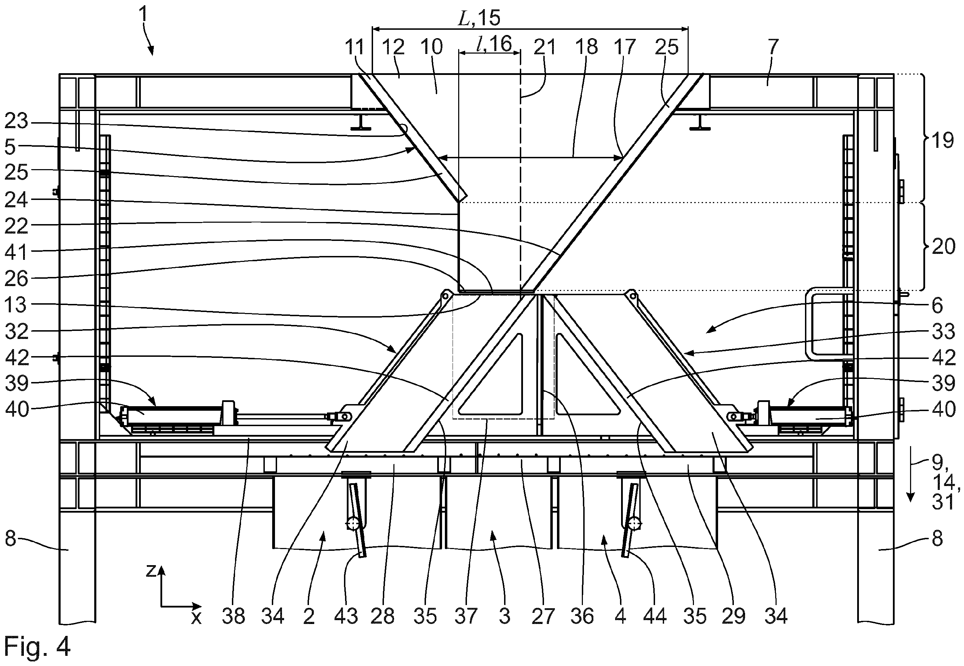

Durch das Ein- bzw. Ausfahren der Teleskopzylinder 40 der Antriebseinheiten 39 wird die jeweiligen Schüttgutrutsche 32, 33 entlang der Schienen 38 zwischen ihrer Passivstellung und ihrer Aktivstellung verlagert. In den Fig. 1, 2 und 3 ist die Schüttgutrutsche 32 in ihrer Passivstellung gezeigt. In Fig. 4 und 5 ist die Schüttgutrutsche 32 in ihrer Aktivstellung gezeigt. Die Schüttgutrutsche 33 ist in den Fig. 1, 2, 4 und 5 in ihrer Passivstellung und in der Fig. 3 in ihrer Aktivstellung dargestellt. In der jeweiligen Passivstellung geben die Schüttgutrutschen 32, 33 das Schüttvolumen 30 frei. In der Aktivstellung ragt die jeweilige Schüttgutrutsche 32, 33 in das Schüttvolumen 30 hinein und erstreckt sich bis zum jeweiligen weiteren Auslass 28, 29. Dies wird im Folgenden näher erläutert:
In den Fig. 1 und 2 sind beide Schüttgutrutschen 32, 33 in der jeweiligen Passivstellung gezeigt. In der jeweiligen Passivstellung der Schüttgutrutschen 32, 33 sind die Teleskopzylinder 40 eingefahren und die Schüttgutrutschen 32, 33 in der Längsrichtung x direkt benachbart zu den Schüttvolumen 30 angeordnet. Die Schüttgutrutschen 32, 33 ragen nicht in das Schüttvolumen 30 hinein, sondern geben dieses frei. Das Schüttvolumen 30 ist in Längsrichtung x beidseitig durch die Wandbleche 36 der Schüttgutrutschen 32, 33 begrenzt. In Querrichtung y ist das Schüttvolumen 30 durch die Deckbleche 37 der Schüttgutrutsche 33 begrenzt. In dieser Konfiguration wird durch die Austrittsöffnung 13 des Schüttguttrichters 5 strömendes Schüttgut über den Einlass 26 durch das Schüttvolumen 30 in Schüttrichtung 31 zum mittigen Auslass 27 geleitet und gelangt von dort in den mittigen Schüttgut-Container 3. In der Passivstellung beider Schüttgutrutschen 32, 33 wird der Schüttgut-Container 3 beschickt. Das Schüttgut kann hierbei nicht zur Seite entweichen, da das Schüttvolumen 30 durch die Wandbleche 36 und die Deckbleche 37 eingefasst ist.

In der jeweiligen Passivstellung überdecken die Schüttgutrutschen 32, 33 einen Querschnitt des jeweiligen weiteren Auslasses 28, 29 vollständig. Die Schüttgutrutschen 32, 33 bilden ein Dach über dem jeweiligen weiteren Auslass. Schüttgut kann nicht unbeabsichtigt von oben in den jeweiligen Auslass fallen.

In Fig. 3 ist die Schüttgutrutsche 32 in ihrer Passivstellung, die Schüttgutrutsche 33 in ihrer Aktivstellung gezeigt. Hierbei ist der Teleskopzylinder 40 der Antriebseinheit 39 der Schüttgutrutsche 33 teleskopiert. Die Schüttgutrutsche 33 ist in Längsrichtung x derart verlagert, dass die Schüttgutrutsche 33 in das Schüttvolumen 30 hineinragt. Der Rohr-Einlass 41 des Rutschen-Rohrs 34 der Schüttgutrutsche 33 deckt den Einlass 26 und damit den senkrecht zu der Schüttrichtung 31 definierten Querschnitt des Schüttvolumens 30 vollständig ab. Durch die Schüttgutrutsche 33 stellt die kürzeste Verbindung zwischen dem Einlass 26 und dem rechten Auslass 29 dar. Ein durch die Austrittsöffnung 13 des Schüttguttrichters 5 strömendes Schüttgut wird durch das Rutschen-Rohr 34 der Schüttgutrutsche 33 zum rechten Auslass 29 geführt und gelangt von dort in den rechten Schüttgut-Container 4. In der Aktivstellung der Schüttgutrutsche 33 wird der Schüttgut-Container 4 beschickt.

In den Fig. 4 und 5 ist die Schüttgutrutsche 32 in ihrer Aktivstellung, die Schüttgutrutsche 33 in ihrer Passivstellung gezeigt. Der Teleskopzylinder 40 der der Schüttgutrutsche 32 zugeordneten Antriebseinheit 39 ist teleskopiert. Die Schüttgutrutsche 32 ragt in das Schüttvolumen 30 hinein. Der Rohr-Einlass 41 des Rutschen-Rohrs 34 der Schüttgutrutsche 32 deckt den senkrecht zu der Schüttrichtung 31 definierten Querschnitt des Schüttvolumens 30 vollständig ab. Durch das Rutschen-Rohr 34 der Schüttgutrutsche 32 wird eine direkte Verbindung zwischen dem Einlass 26 und dem linken Auslass 28 für das Schüttgut bereitgestellt. Ein durch die Austrittsöffnung 13 des Schüttguttrichters 5 strömendes Schüttgut wird durch den Rohr-Einlass 41 entlang des Rutschen-Rohrs 34 der Schüttgutrutsche 32 zum linken Auslass 28 geleitet und gelangt von dort in den linken Schüttgut-Container 2. In der Aktivstellung der Schüttgutrutsche 32 wird der Schüttgut-Container 2 beschickt.

Die Rutschen-Gehäuse 35 sind wie das Gehäuse 11 aus einem verschleißfesten Material. Zudem sind seitlich an der Rutschfläche um 45° angestellte Eckleisten 42 aus verschleißfestem Material vorgesehen. Diese verhindern ein Anbacken des Schüttguts in den Rutschen-Rohren 34.

Im Bereich des linken Auslasses 28 und des rechten Auslasses 29 befindet sich jeweils ein Prallblech 43, 44. Das Prallblech 43 erstreckt sich in Schüttrichtung 31 unterhalb des linken Auslasses 28 in den linken Schüttgut-Container 2 hinein. Das Prallblech 44 erstreckt sich in Schüttrichtung 31 unterhalb des rechten Auslasses 29 in den rechten Schüttgut-Container 4. Die Prallbleche 43, 44 sind im Bereich der jeweiligen Auslässe 28, 29 derart angeordnet, dass ein über die jeweilige Schüttgutrutsche 32, 33 strömendes Schüttgut umgelenkt wird. Das Schüttgut wird durch die Umlenkung im Wesentlichen in Schwerkraftrichtung 9 in den jeweiligen Schüttgut-Container 2, 4 geleitet. Hierdurch wird das Schüttgut gebündelt, wodurch eine Segregation des Schüttguts vermieden wird. Besonders im Zusammenspiel mit dem Kreuzen der Schüttgutströme in dem Schüttguttrichter 5 ist hierdurch eine Materialsegregation über die gesamte Schüttgut-Beschickungsanlage zuverlässig vermieden. Die Prallbleche 43, 44 sind relativ zu der Schwerkraftrichtung 9 geneigt ausgerichtet. Die Ausrichtung der Prallbleche 43, 44 ist gegenläufig zu der Ausrichtung der jeweiligen Schüttgutrutsche 32, 33 relativ zu der Schwerkraftrichtung 9. So ist das in Schwerkraftrichtung 9 untere Ende des im Bereich des linken Auslasses 28 angeordneten Prallblechs 43 gegenüber dessen in Schwerkraftrichtung 9 oberen Endes in positive x-Richtung versetzt. Bei der in Fig. 4 gezeigten Aktivstellung der Schüttgutrutsche 32 strömt Schüttgut in den linken Schüttgut-Container 2. Das Schüttgut, das die Schüttgutrutsche 32 verlässt, hat eine Geschwindigkeitskomponente in Schwerkraftrichtung 9 und eine Geschwindigkeitskomponente in negativer x-Richtung. Durch die Ausrichtung des Prallblechs 43 wird die Geschwindigkeitskomponente in negativer x-Richtung ausgeglichen, sodass das Schüttgut in Schwerkraftrichtung abgeladen wird. Die Ausrichtung des Prallblechs 44 ist entsprechend an die Geschwindigkeitskomponenten von durch die Schüttgutrutsche 33 strömenden Schüttgut angepasst.

## Patentansprüche

1. Schüttgutweiche für eine Schüttgut-Beschickungsanlage, aufweisend
- einen Einlass (26) für ein Schüttgut,
- einen in einer Schüttrichtung (31) von dem Einlass (26) beabstandeten ersten Auslass (27) für das Schüttgut, wobei zwischen dem ersten Auslass (27) und dem Einlass (26) ein Schüttvolumen (30) entlang der Schüttrichtung (31) definiert ist,
- mindestens zwei weitere Auslässe (28, 29) für das Schüttgut, und
- je weiteren Auslass (28, 29) eine Schüttgutrutsche (32, 33), die jeweils unabhängig voneinander zwischen einer das Schüttvolumen (30) freigebenden Passivstellung und einer Aktivstellung verlagerbar sind,
- wobei jede Schüttgutrutsche (32, 33) in der jeweiligen Aktivstellung zumindest zum Teil in das Schüttvolumen (30) hineinragt und sich bis zum jeweiligen weiteren Auslass (28, 29) erstreckt.

2. Schüttgutweiche nach Anspruch 1, **dadurch gekennzeichnet, dass** die verschiedenen Schüttgutrutschen (32, 33) an unterschiedlichen Seiten eines senkrecht zu der Schüttrichtung (31) definierten Querschnitts des Schüttvolumens (30) angeordnet sind.

3. Schüttgutweiche nach Anspruch 2, **gekennzeichnet durch** mindestens ein Deckblech (37), das das Schüttvolumen (30) zu einer Seite hin begrenzt, an welcher keine Schüttgutrutsche (32, 33) angeordnet ist.

4. Schüttgutweiche nach einem der vorgenannten Ansprüche, **dadurch gekennzeichnet, dass** mindestens eine der Schüttgutrutschen (32, 33) in ihrer Passivstellung in einer Richtung senkrecht zu der Schüttrichtung (31) direkt benachbart zu dem Schüttvolumen (30) gelagert ist.

5. Schüttgutweiche nach einem der vorgenannten Ansprüche, **dadurch gekennzeichnet, dass** an mindestens einer der Schüttgutrutschen (32, 33) ein Wandblech (36) angeordnet ist, welches in der jeweiligen Passivstellung das Schüttvolumen (30) zu der betreffenden Schüttgutrutsche (32, 33) hin begrenzt.

6. Schüttgutweiche nach einem der vorgenannten Ansprüche, **gekennzeichnet durch** eine Antriebseinheit (39) je Schüttgutrutsche (32, 33) zum Verlagern des jeweiligen Schüttgutrutsche (32, 33).

7. Schüttgutweiche nach Anspruch 6, **dadurch gekennzeichnet, dass** die Antriebseinheiten (39) je einen Teleskopzylinder (40) aufweisen.

8. Schüttgutweiche nach einem der vorgenannten Ansprüche, **dadurch gekennzeichnet, dass** mindestens eine der Schüttgutrutschen (32, 33) in ihrer Aktivstellung einen senkrecht zu der Schüttrichtung (31) definierten Querschnitt des Schüttvolumens (30) vollständig abdeckt.

9. Schüttgutweiche nach einem der vorgenannten Ansprüche, **dadurch gekennzeichnet, dass** mindestens eine der Schüttgutrutschen (32, 33) in ihrer jeweiligen Passivstellung einen Querschnitt des jeweiligen weiteren Auslasses (28, 29) überdeckt.

10. Schüttgutweiche nach einem der vorgenannten Ansprüche, **dadurch gekennzeichnet, dass** mindestens eine der Schüttgutrutschen (32, 33) in ihrer Aktivstellung entlang einer kürzeste Verbindung zwischen dem Einlass (26) und dem zugehörigen weiteren Auslass (28, 29) verläuft.

11. Schüttgutweiche nach einem der vorgenannten Ansprüche, **dadurch gekennzeichnet, dass** mindestens eine der Schüttgutrutschen (32, 33) ein Rutschen-Rohr (34) zur Führung des Schüttgut aufweist.

12. Schüttgutweiche nach Anspruch 11, **dadurch gekennzeichnet, dass** das Rutschen-Rohr (34) einen Rohr-Einlass (41) aufweist, wobei der Rohr-Einlass (41) in der Aktivstellung der betreffenden Schüttgutrutsche (32, 33) einen Querschnitt des Einlasses (26) vollständig überdeckt.

13. Schüttgutweiche nach einem der vorgenannten Ansprüche, **dadurch gekennzeichnet, dass** im Bereich mindestens eines der Auslässe (27, 28, 29) ein Prallblech (43, 44) zum Umlenken eines durch den jeweiligen Auslass (27, 28, 29) strömenden Schüttguts angeordnet ist.

14. Schüttgut-Beschickungsanlage mit einer Schüttgutweiche gemäß einem der Ansprüche 1 bis 13.

15. Schüttgut-Beschickungsanlage nach Anspruch 14, **gekennzeichnet durch** einen Schüttguttrichter (5) mit einer Austrittsöffnung (13) für ein Schüttgut, wobei die Austrittsöffnung (13) mit dem Einlass (26) der Schüttgutweiche (6) korrespondiert.

## Claims

1. Bulk goods aligner for a bulk goods feeding assembly, comprising
- an inlet (26) for bulk goods,
- a first outlet (27) for the bulk goods which is at a spacing from the inlet (26) in a pouring direction (31), wherein a bulk volume (30) is defined along the pouring direction (31) between the first outlet (27) and the inlet (26),
- at least two further outlets (28, 29) for the bulk goods, and
- a bulk goods slide (32, 33) for each further outlet (28, 29), which bulk goods slides are each displaceable independently from one another between a passive position releasing the bulk volume (30) and an active position,
- wherein, in the respective active position, each bulk goods slide (32, 33) projects at least in part into the bulk volume (30) and extends up to the respective further outlet (28, 29).

2. Bulk goods aligner according to Claim 1, **characterized in that** the different bulk goods slides (32, 33) are arranged on different sides of a cross section of the bulk volume (30) which is defined perpendicularly to the pouring direction (31).

3. Bulk goods aligner according to Claim 2, **characterized by** at least one cover plate (37) which delimits the bulk volume (30) toward a side which does not have a bulk goods slide (32, 33) arranged thereon.

4. Bulk goods aligner according to one of the aforenamed claims, **characterized in that,** in its passive position, at least one of the bulk goods slides (32, 33) is mounted directly adjacent to the bulk volume (30) in a direction perpendicularly to the pouring direction (31).

5. Bulk goods aligner according to one of the aforenamed claims, **characterized in that** a wall plate (36), which delimits the bulk volume (3) toward the relevant bulk goods slide (32, 33) in the respective passive position, is arranged on at least one of the bulk goods slides (32, 33).

6. Bulk goods aligner according to one of the aforenamed claims, **characterized by** a drive unit (39) per bulk goods slide (32, 33) for displacing the respective bulk goods slide (32, 33).

7. Bulk goods aligner according to Claim 6, **characterized in that** the drive units (39) have one telescopic cylinder (40) each.

8. Bulk goods aligner according to one of the aforenamed claims, **characterized in that,** in its active position, at least one of the bulk goods slides (32, 33) completely covers a cross section of the bulk volume which is defined perpendicularly to the pouring direction (31).

9. Bulk goods aligner according to one of the aforenamed claims, **characterized in that,** in its respective passive position, at least one of the bulk goods slides (32, 33) overlaps a cross section of the respective further outlet (28, 29).

10. Bulk goods aligner according to one of the aforenamed claims, **characterized in that,** in its active position, at least one of the bulk goods slides (32, 33) extends along a shortest connection between the inlet (26) and the associated further outlet (28, 29).

11. Bulk goods aligner according to one of the aforenamed claims, **characterized in that** at least one of the bulk goods slides (32, 33) comprises a slide tube (34) for guiding the bulk goods.

12. Bulk goods aligner according to Claim 11, **characterized in that** the slide tube (34) comprises a tube inlet (41), wherein, with the relevant bulk goods slide (32, 33) in the active position, the tube inlet (41) completely overlaps a cross section of the inlet (26).

13. Bulk goods aligner according to one of the aforenamed claims, **characterized in that** a baffle plate (43, 44) for diverting bulk goods flowing through the respective outlet (27, 28, 29) is arranged in the region of at least one of the outlets (27, 28, 29).

14. Bulk goods feeding assembly having a bulk goods aligner according to one of Claims 1 to 13.

15. Bulk goods feeding assembly according to Claim 14, **characterized by** a bulk goods hopper (5) having an outlet opening (13) for bulk goods, wherein the outlet opening (13) corresponds with the inlet (26) of the bulk goods aligner (6).

## Revendications

1. Aiguillage de produits en vrac destiné à un système de chargement de produits en vrac, présentant
- une entrée (26) destinée à un produit en vrac,
- une première sortie (27) destinée au produit en vrac, laquelle est espacée de l'entrée (26) dans une direction de déversement (31), un volume en vrac (30) étant défini le long de la direction de déversement (31) entre la première sortie (27) et l'entrée (26),
- au moins deux autres sorties (28, 29) destinées au produit en vrac, et
- une goulotte à produits en vrac (32, 33) pour chaque autre sortie (28, 29), les goulottes à produits en vrac pouvant respectivement être déplacées indépendamment l'une de l'autre entre une position passive qui libère le volume en vrac (30) et une position active,
- chaque goulotte à produits en vrac (32, 33) faisant saillie au moins partiellement dans le volume en vrac (30) dans la position active respective, et s'étendant jusqu'à l'autre sortie respective (28, 29).

2. Aiguillage de produits en vrac selon la revendication 1, **caractérisé en ce que** les différentes goulottes à produits en vrac (32, 33) sont disposées sur différents côtés d'une section transversale du volume en vrac (30) qui est définie perpendiculairement à la direction de déversement (31).

3. Aiguillage de produits en vrac selon la revendication 2, **caractérisé par** au moins une plaque de recouvrement (37) qui confine le volume en vrac (30) vers un côté sur lequel aucune goulotte à produits en vrac (32, 33) n'est disposée.

4. Aiguillage de produits en vrac selon l'une quelconque des revendications précédentes, **caractérisé en ce qu'au** moins l'une des goulottes à produits en vrac (32, 33), dans sa position passive, est montée dans une direction perpendiculaire à la direction de déversement (31) directement adjacente au volume en vrac (30).

5. Aiguillage de produits en vrac selon l'une quelconque des revendications précédentes, **caractérisé en ce qu'**une plaque murale (36) est disposée sur au moins l'une des goulottes à produits en vrac (32, 33), laquelle plaque murale confine le volume en vrac (30) vers la goulotte à produits en vrac correspondante (32, 33) dans la position passive respective.

6. Aiguillage de produits en vrac selon l'une quelconque des revendications précédentes, **caractérisé par** une unité d'entraînement (39) par goulotte à produits en vrac (32, 33), destinée à déplacer la goulotte à produits en vrac respective (32, 33).

7. Aiguillage de produits en vrac selon la revendication 6, **caractérisé en ce que** les unités d'entraînement (39) présentent chacune un vérin télescopique (40).

8. Aiguillage de produits en vrac selon l'une quelconque des revendications précédentes, **caractérisé en ce qu'**au moins l'une des goulottes à produits en vrac (32, 33), dans sa position active, recouvre entièrement une section transversale du volume en vrac (30) qui est définie perpendiculairement à la direction de déversement (31).

9. Aiguillage de produits en vrac selon l'une quelconque des revendications précédentes, **caractérisé en ce qu'**au moins l'une des goulottes à produits en vrac (32, 33), dans sa position passive respective, recouvre une section transversale de l'autre sortie respective (28, 29).

10. Aiguillage de produits en vrac selon l'une quelconque des revendications précédentes, **caractérisé en ce qu'**au moins l'une des goulottes à produits en vrac (32, 33), dans sa position active, s'étend le long de la liaison la plus courte entre l'entrée (26) et l'autre sortie associée (28, 29).

11. Aiguillage de produits en vrac selon l'une quelconque des revendications précédentes, **caractérisé en ce qu'**au moins l'une des goulottes à produits en vrac (32, 33) présente un tube coulissant (34) destiné à guider le produit en vrac.

12. Aiguillage de produits en vrac selon la revendication 11, **caractérisé en ce que** le tube coulissant (34) présente une entrée de tube (41), l'entrée de tube (41), dans la position active de la goulotte à produits en vrac correspondante (32, 33), recouvrant entièrement une section transversale de l'entrée (26).

13. Aiguillage de produits en vrac selon l'une quelconque des revendications précédentes, **caractérisé en ce qu'**une chicane (43, 44) destinée à dévier un produit en vrac s'écoulant par la sortie respective (27, 28, 29) est disposée dans la zone d'au moins l'une des sorties (27, 28, 29).

14. Système de chargement de produits en vrac comportant un aiguillage de produits en vrac selon l'une des revendications 1 à 13.

15. Système de chargement de produits en vrac selon la revendication 14, **caractérisé par** une trémie de produits en vrac (5) comportant une ouverture de sortie (13) destinée à un produit en vrac, l'ouverture de sortie (13) correspondant à l'entrée (26) de l'aiguillage de produits en vrac (6).
